(19) Europäisches Patentamt
European Patent Office
Office européen des brevets

(11) **EP 4 314 722 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **22706848.3**

(22) Anmeldetag: **21.02.2022**

(51) Internationale Patentklassifikation (IPC):
**G01F 1/68** (2006.01)   **G01F 1/7084** (2022.01)
**G01F 25/10** (2022.01)   **G01F 15/02** (2006.01)
**G01F 1/696** (2006.01)   **G01K 3/10** (2006.01)
**G01K 13/02** (2021.01)   **G01N 25/20** (2006.01)
**G01K 3/08** (2006.01)   **G01K 7/18** (2006.01)
**G01K 7/22** (2006.01)

(52) Gemeinsame Patentklassifikation (CPC):
**G01F 1/68; G01F 1/6965; G01F 1/7084; G01F 15/02; G01F 25/10; G01K 3/08; G01K 7/18; G01K 7/22; G01K 13/02; G01N 25/20**

(86) Internationale Anmeldenummer:
**PCT/EP2022/054256**

(87) Internationale Veröffentlichungsnummer:
**WO 2022/199960 (29.09.2022 Gazette 2022/39)**

(54) **THERMISCHER SENSOR UND VERFAHREN ZUM BETREIBEN DESSELBEN**

THERMAL SENSOR AND METHOD FOR OPERATING THE THERMAL SENSOR

CAPTEUR THERMIQUE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2021 DE 102021107080**

(43) Veröffentlichungstag der Anmeldung:
**07.02.2024 Patentblatt 2024/06**

(73) Patentinhaber: **Innovative Sensor Technology IST AG**
**9642 Ebnat-Kappel (CH)**

(72) Erfinder:
- **BERNHARDSGRÜTTER, Ralf Emanuel**
  **8583 Sulgen (CH)**
- **HEPP, Christoph**
  **9500 Wil (CH)**

(74) Vertreter: **Endress + Hauser Group Services (Deutschland) AG+Co. KG**
**Colmarer Straße 6**
**79576 Weil am Rhein (DE)**

(56) Entgegenhaltungen:
WO-A1-2020/009921   DE-A1- 102011 075 519
DE-A1- 102015 115 761   US-A1- 2009 000 396
US-A1- 2016 245 681   US-A1- 2016 290 849

- BERNHARDSGRUTTER RALF E ET AL: "Robust and Flexible Thermal Sensor Using the 3-Omega-Method to Investigate Thermal Properties of Fluids", 2019 20TH INTERNATIONAL CONFERENCE ON SOLID-STATE SENSORS, ACTUATORS AND MICROSYSTEMS & EUROSENSORS XXXIII (TRANSDUCERS & EUROSENSORS XXXIII), IEEE, 23 June 2019 (2019-06-23), pages 1909 - 1912, XP033600146, [retrieved on 20190820], DOI: 10.1109/TRANSDUCERS.2019.8808543
- OH DONG-WOOK: "Thermal Conductivity Measurement of Liquids by Using a Suspended Microheater", INTERNATIONAL JOURNAL OF THERMOPHYSICS, SPRINGER US, NEW YORK, vol. 38, no. 10, 16 August 2017 (2017-08-16), pages 1 - 8, XP036299218, ISSN: 0195-928X, [retrieved on 20170816], DOI: 10.1007/S10765-017-2278-7

- ROMAN BEIGELBECK ET AL: "A novel measurement method for the thermal properties of liquids by utilizing a bridge-based micromachined sensor;Bridge-based thermal property sensor for liquids", MEASUREMENT SCIENCE AND TECHNOLOGY, IOP, BRISTOL, GB, vol. 22, no. 10, 26 August 2011 (2011-08-26), pages 105407, XP020211921, ISSN: 0957-0233, DOI: 10.1088/0957-0233/22/10/105407

**Beschreibung**

Die Erfindung betrifft ein Verfahren zum Betreiben eines thermischen Sensors, wobei der thermische Sensor zumindest ein erstes Sensorelement und eine Elektronikeinheit aufweist. Des Weiteren betrifft die Erfindung einen thermischen Sensor, welcher dazu ausgestaltet ist, mittels des erfindungsgemäßen Verfahrens betrieben zu werden.

Zur Bestimmung eines Durchflusses, bzw. der Strömungsgeschwindigkeit eines Messmediums, bzw. eines Fluides, beispielsweise eines Gases, Gasgemisches oder einer Flüssigkeit, sind thermische Strömungssensoren bekannt. Diese nutzen aus, dass ein (strömendes) Messmedium Wärme von einer beheizten Fläche abtransportiert. Thermische Strömungssensoren bestehen typischerweise aus mehreren Funktionselementen, üblicherweise zumindest aus einem niederohmigen Heizelement und einem hochohmigen Widerstandselement, welches als Temperatursensor dient. Alternativ sind thermische Strömungssensoren mit mehreren niederohmigen Heizelementen als Heizer und Temperatursensor aufgebaut.

Kalorimetrische thermische Strömungssensoren bestimmen über eine Temperaturdifferenz zwischen zwei Temperatursensoren, welche flussabwärts (engl. "downstream") und flussaufwärts (engl. "upstream") von einem Heizelement angeordnet sind, den Durchfluss bzw. die Flussrate des Fluids in einem Kanal. Hierzu wird ausgenutzt, dass die Temperaturdifferenz bis zu einem gewissen Punkt linear zu dem Durchfluss bzw. der Flussrate ist. Dieses Verfahren bzw. die Methode ist in der einschlägigen Literatur ausgiebig beschrieben.

Anemometrische thermische Strömungssensoren bestehen aus zumindest einem Heizelement, welches während der Messung des Durchflusses erhitzt wird. Durch die Umströmung des Heizelements mit dem Messmedium findet ein Wärmetransport in das Messmedium statt, der sich mit der Strömungsgeschwindigkeit verändert. Durch Messung der elektrischen Größen des Heizelements kann auf die Strömungsgeschwindigkeit des Messmediums geschlossen werden.

Ein solcher anemometrischer thermischer Strömungssensor wird typischerweise in einem der folgenden beiden Regelarten betrieben:
Bei der Regelart "Constant-Current Anemometry" (CCA) wird das Heizelement mit einem konstanten Strom beaufschlagt. Durch die Umströmung mit dem Messmedium ändert sich der Widerstand des Heizelements und damit die am Heizelement abfallende Spannung, welche das Messsignal darstellt. Analog dazu funktioniert die Regelart "Constant-Voltage Anemometry" (CVA), bei welcher das Heizelement mit einer konstanten Spannung beaufschlagt wird.

Bei der Regelart "Constant-Temperature Anemometry (CTA)" wird das Heizelement auf einer im Mittel konstanten Temperatur gehalten. Mittels dieser Regelart sind relativ hohe Strömungsgeschwindigkeiten messbar.

Je nach Strömungsgeschwindigkeit wird mehr oder weniger Wärme durch das fließende Messmedium abtransportiert und es muss entsprechend mehr oder weniger elektrische Leistung nachgeführt werden, um die Temperatur konstant zu halten. Diese nachgeführte elektrische Leistung ist ein Maß für die Strömungsgeschwindigkeit des Messmediums.

Die abtransportierte Wärme bei anemometrischen oder kalorimetrischen thermischen Strömungssensoren ist jedoch von thermischen Parametern des Messmediums abhängig - in erster Linie sind dies die Wärmeleitfähigkeit und die Wärmekapazität des Messmediums. Demzufolge muss der thermische Strömungssensor vorab in einer speziellen Kalibrationseinrichtung für ein spezifisches Messmedium kalibriert werden. Wechselt das Messmedium, so muss der thermische Strömungssensor von Neuem in der Kalibrationseinrichtung kalibriert werden bevor dieser wieder richtige Werte ausgibt.

Es existieren bereits Messprinzipansätze von Membranströmungssensoren für Gas, die in einem ersten Schritt Wärmeleitfähigkeit und Wärmekapazität messen (mittels konstanter Leistung oder Wechselstrom-getrieben) und diese Information in der Messung der Strömungsgeschwindigkeit zur Kompensation der Fluidabhängigkeit in einem zweiten Schritt nutzen. Oftmals werden aber gewisse Informationen über die Eigenschaft des Gases a priori benötigt, damit diese Selbstkalibrierung funktionieren kann.

Des Weiteren müssen die Wärmeleitfähigkeit und die Wärmekapazität des Messmediums oft getrennt gemessen werden, bzw. bekannt sein. Diese getrennte Bestimmung erfordert häufig auch unterschiedliche Messbedingungen (beispielsweise ein Nicht-Strömen des Messmediums, also eine Strömungsgeschwindigkeit von Null), bzw. Messsequenzen, was eine Durchführung aufwendiger macht, das heißt, es können mehrere Schritte, unterschiedliche Sensoren und Elektronikkomponenten benötigt werden. Eine derart aufwendige Umsetzung kann oft zu höheren Produktionskosten und somit auch zu höheren Preisen führen.

In der DE 10 2018 130 548 A1 ist ein Verfahren beschrieben, bei welchem ein thermischer Strömungssensor die thermischen Parameter eines Messmediums mittels einer 3-Omega-Methode erfasst. Die vom thermischen Strömungssensor erfasste Strömungsgeschwindigkeit des Fluids wird anschließend anhand der thermischen Parameter spezifisch auf das Messmedium angepasst. Messungen thermischer Parameter eines Messmediums mittels der 3-Omega-Methode sind auch in der Veröffentlichung Roman Beigelbeck et al.: "A novel measurement method for the thermal properties of liquids by utilizing a bridge-based micromachined sensor", erschienen in "Measurement Science and Technology" am 26. August 2011, beschrieben.

In der zum Anmeldetag dieser Patentanmeldung noch unveröffentlichten Patentanmeldung mit dem Aktenzeichen DE102020114487.3 ist ein Verfahren beschrieben, in welchem die durch einen thermischen Strömungssensor erfasste Strömungsgeschwindigkeit eines Messmediums auf Basis eines mathematischen, bzw. physikalischen Modells kompensiert wird. Hierfür werden für das Messmedium vorab spezifische Messdaten erhoben.

Bei beiden Verfahren erfolgt die Bestimmung der für die Kompensation relevanten Daten bei einer Strömungsgeschwindigkeit des Messmediums von Null. Wird das Messmedium geändert, so muss der laufende Betrieb für ein erneutes Erheben dieser Daten stets unterbrochen werden. Ein Betreiben des Strömungssensors mit einem sich ändernden Messmedium kann unter Umständen in unpräzise Strömungswerten resultieren.

In der WO 2020/009921 A1 ist ein Verfahren beschrieben, in welchem die thermischen Eigenschaften eines Messmediums mittels eines Sensors erfasst werden, welcher in der Kanalinnenwand in einem Bereich des Strömungsprofils platziert wird, in welchem die Strömungsgeschwindigkeit des Messmediums Null ist.

Ausgehend von dieser Problematik liegt der Erfindung die Aufgabe zugrunde, ein Verfahren vorzustellen, ein Erfassen von Messwerten betreffend die Eigenschaften eines Messmediums im laufenden Messbetrieb erlaubt.

Die Aufgabe wird durch ein Verfahren zum Betreiben eines thermischen Sensors gelöst, wobei der thermische Sensor zumindest ein erstes Sensorelement und eine Elektronikeinheit aufweist,

> wobei das erste Sensorelement mit einem Behältnis, insbesondere einer Rohrleitung, in thermischen Kontakt gebracht wird,
> wobei das Behältnis von einem Messmedium mit einer beliebigen Strömungsgeschwindigkeit durchströmt wird,
> wobei das erste Sensorelement mittels einer in das Sensorelement eingebrachten Wechselspannung periodisch erwärmt wird und simultan ein Verlauf der Temperatur des ersten Sensorelements erfasst wird,
> wobei eine Messgröße des Messmediums anhand eines Vergleichs des Verlaufs der dritten harmonischen Oberschwingung der in das erste Sensorelement eingebrachten Wechselspannung mit dem Verlauf der dritten harmonischen Oberschwingung der Temperatur des ersten Sensorelements, insbesondere durch Berechnung der Phasenverschiebung zwischen dem Verlauf der dritten harmonischen Oberschwingung der Wechselspannung und dem Verlauf der Amplitude der dritten harmonischen Oberschwingung der Temperatur, bestimmt wird, und
> wobei eine Frequenz der Wechselspannung derart ausgewählt wird, dass eine Eindringtiefe der emittierten Wärme des ersten Sensorelements in das Strömungsprofil des Messmediums vorliegt, in welcher die Strömungsgeschwindigkeit des Messmediums nahezu Null beträgt.

Im erfindungsgemäßen Verfahren wird also eine 3-Omega-Messmethode angewandt, um die Messgröße des Messmediums zu bestimmen. Die Messgröße besteht aus einer Amplituden- und/oder Phasendifferenz zwischen der in das Sensorelement eingebrachten Wechselspannung und der nachziehenden Temperatur des Sensorelements (jeweils betrachtet für die dritte harmonischen Oberschwingung) und hängt von den thermischen Eigenschaften eines spezifischen Messmediums ab. Der wesentliche Punkt des Verfahrens ist, dass sich die Eindringtiefe der durch die eingebrachten Wechselspannung von dem Sensorelement emittierten Temperatur durch die Frequenz dieser Wechselspannung beeinflussen lässt. Die Frequenz wird dabei derart gewählt, dass die Eindringtiefe zwar bis in das Messmedium reicht, jedoch in einem Bereich liegt, in welchem die Strömungsgeschwindigkeit des Messmediums nahezu null beträgt. Dies ist insbesondere in der Nähe der Wandung des Behältnisses der Fall. In diesem Bereich ist die dominieren die Einflüsse der Eigenschaften des Messmediums die erfasste Messgröße gegenüber dem Einfluss der Strömungsgeschwindigkeit. Damit lässt sich die Messgröße auch im laufenden Betrieb, also bei Vorliegen einer Strömungsgeschwindigkeit im Behälter von größer Null, erfassen.

Die Eindringtiefe ist abhängig von der gewählten Frequenz:

$$ET \sim \sqrt{\frac{1}{f}}$$

ET bezeichnet hierbei die Eindringtiefen, f die Frequenz.

Gemäß einer vorteilhaften Weiterbildung des erfindungsgemäßen Verfahrens ist vorgesehen, dass die Frequenz entsprechend der Formel

$$f = \frac{\alpha}{4\pi \left[ R\left( 1 - \sqrt{1 - \frac{\gamma}{2}} \right)^2 \right]}$$ berechnet und ausgewählt wird, wobei f die Frequenz bezeichnet, wobei $\alpha$ ein Maß der thermischen Diffusivität des ersten Messmediums bezeichnet, wobei R einer halben Kanalbreite des Behältnisses an derjenigen Stelle entspricht, an welcher das erste Sensorelement mit dem Behältnis in thermischen Kontakt steht, wobei $\gamma$ eine dimensionslose Größe bzgl. der Strömungsgeschwindigkeit ist und ist in einem Bereich zwischen 0 und 0,2 liegt.

Durch Anwenden der Formel wird ein Frequenzbereich bestimmt, durch welchen die Eindringtiefe den gewünschten Bereich im Behältnis erreicht. Für die Diffusivität $\alpha$ genügt die Kenntnis darüber, in welchem Aggregatzustand (flüssig oder gasförmig) das Messmedium vorliegt, da die Diffusivität zwischen verschiedenen Aggregatzuständen mediumsunabhängig sehr unterschiedlich ist. Je genauer jedoch Informationen über das Messmedium vorliegen, desto genauer kann der Frequenzbereich gewählt werden. Ist beispielsweise bekannt, dass ein Gemisch von Wasser/Alkohol benutzt wird, so ist die Konzentrationen der einzelnen Komponenten für die Bestimmung der optimalen Frequenz unwichtig, da sich die Diffusivität nur geringfügig unterscheidet. Des Weiteren ist ein Frequenzbereich sehr vorteilhaft, da der thermische Sensor für eine Palette unterschiedlicher Messmedien funktionieren soll, deren Eigenschaften a priori unbekannt sind.

Die Frequenz, bzw. der Frequenzbereich kann unabhängig von der genauen Ausgestaltung des thermischen Sensors (in puncto Aufbau, Geometrie, verwendet Materialien, etc.) bestimmt werden und ist im Wesentlichen abhängig von der durch das Behältnis vorgegebenen Kanalbreite.

Unter Anwendung dieses Grundprinzips lassen sich drei Applikationsvarianten alternativ oder ergänzend realisieren:

Gemäß einer ersten Variante des erfindungsgemäßen Verfahrens ist vorgesehen, dass der thermische Sensor als thermischer Strömungssensor betrieben wird, weiter umfassend:

- Berechnen einer Korrekturgröße, wobei die Korrekturgröße Abweichungen der Messgröße des Messmediums zu einer Referenzmessgröße eines Referenzmessmediums kompensiert; und
- Erfassen einer Strömungsgeschwindigkeit des Messmediums und Erstellen von mittels der Korrekturgröße kompensierten Messwerten der Strömungsgeschwindigkeit.

Der thermische Strömungssensor kann nach zumindest einer der im einleitenden Teil der Beschreibung beschriebenen Regelarten betrieben werden.

Der Begriff "Strömungsgeschwindigkeit" umfasst ebenso den Volumenstrom eines Messmediums.

Gemäß einer vorteilhaften Ausgestaltung der ersten Variante des erfindungsgemäßen Verfahrens ist vorgesehen, dass ein mathematisches Modell des thermischen Sensors für das Berechnen der Korrekturgröße verwendet wird, wobei das mathematische Modell eine Abhängigkeit eines erstellten Messwerts einer erfassten Strömungsgeschwindigkeit von einer Messgröße eines jeden beliebigen Messmediums beschreibt. Die Messgröße ist also ein direktes Maß für die Kompensation, bzw. für die zu erwartende Abweichung der gemessenen Strömungsgeschwindigkeit zu der tatsächlich vorliegenden Strömungsgeschwindigkeit.

Gemäß einer vorteilhaften Weiterbildung der ersten Variante des erfindungsgemäßen Verfahrens ist vorgesehen, dass der thermische Sensor ein weiteres Sensorelement umfasst, wobei das weitere Sensorelement das Messmedium mittels der Wechselspannung für den Schritt des Bestimmens Messgröße periodisch erwärmt und wobei das erste Sensorelement zum Erfassen der Strömungsgeschwindigkeit des Messmediums verwendet wird. Es kann dadurch instantan auf eine Änderung des Messmediums, bzw. einer Zusammensetzung des Messmediums reagiert werden und die Messwerte der Strömungsgeschwindigkeit unmittelbar in Hinblick auf die Änderung kompensiert werden, da die Strömungsgeschwindigkeit und die Messgröße des Messmediums simultan erfasst werden.

Gemäß einer zweiten Variante des erfindungsgemäßen Verfahrens ist vorgesehen, dass im Falle, dass das Messmedium als binäres Gemisch zweier bekannten Inhaltsstoffe vorliegt, mittels der Messgröße die Konzentrationen der jeweiligen Inhaltsstoffe in dem Messmedium berechnet wird. "Bekannt" bedeutet in diesem Zusammenhang, dass für beide Inhaltsstoffe eine Referenzmessgröße (im Sinne des mittels des 3-Omega-Verfahrens erhobenen Messwerts des Messmediums) vorhanden ist. Die Messgröße des Messmediums befindet sich dann zwischen den beiden Referenzmessgrößen. Die Konzentrationen, bzw. der Anteil der Inhaltsstoffe in dem Messmedium kann dann aus dem "Abstand" der Messgröße von den jeweiligen Grenzen, also den Referenzmessgrößen, berechnet werden.

Gemäß einer vorteilhaften Weiterbildung der ersten Variante und der zweiten Variante des erfindungsgemäßen Verfahrens ist vorgesehen, dass der Schritt des Bestimmens der Messgröße mitsamt dem Berechnen der Korrekturgröße, sowie der Schritt des Erfassens der Strömungsgeschwindigkeit oder der Schritt des Berechnens der Konzentrationen simultan durchgeführt wird. Hierbei bestimmt das weitere Sensorelement die Messgröße, während das (erste) Sensorelement die Strömungsgeschwindigkeit. Die Elektronikeinheit kann dadurch simultan aus der Messgröße die Konzentrationen sowie die Korrekturgröße berechnen.

Gemäß einer dritten Variante des erfindungsgemäßen Verfahrens ist vorgesehen, dass der thermische Sensor als Detektionssensor verwendet wird, wobei die Elektronikeinheit die Messgröße in regelmäßigen Abständen neu bestimmt und mit einer Vergleichsmessgröße eines bekannten Messmedium vergleicht, und wobei die Elektronikeinheit ein Signal erstellt und ausgibt, wenn sich die Messgröße um mehr als einen vorbestimmten Faktor von der Vergleichsgröße unterscheidet. Hierbei wird vorab die Messgröße eines bekannten Messmediums bestimmt, oder zu einem Zeitpunkt $t_0$ der Startwert für das im Behältnis befindliche Messmedium bestimmt. Ändert sich die Zusammensetzung des Messmediums, bzw. das Messmedium selbst, so ändert sich die aktuelle Messgröße des Messmediums.

Gemäß einer vorteilhaften Weiterbildung der ersten Variante und/oder der zweiten Variante des erfindungsgemäßen Verfahrens ist vorgesehen, dass der Schritt des Bestimmens der Messgröße des Messmediums mitsamt dem Berechnen der Korrekturgröße periodisch wiederholt wird und sich mit dem Schritt des Erfassens der Strömungsgeschwindigkeit oder dem Schritt des Berechnens der Konzentrationen abwechselt, wobei für Erstellen der kompensierten Messwerte die aktuell berechnete Korrekturgröße verwendet wird. Auf diese Art und Weisekann durch einen solchen alternierenden Modus auch mit nur einem Messmedium regelmäßig die aktuelle Messgröße des Messmediums bestimmt werden.

Des Weiteren wird die Aufgabe durch einen thermischen Sensor gelöst, welcher dazu ausgestaltet ist, mittels des erfindungsgemäßen Verfahrens betrieben zu werden. Der thermische Sensor kann auf vielfältige Art und Weise ausgestaltet sein, hinsichtlich des Herstellungsverfahrens (MEMS, analoge Bauteile, etc.), der Materialien der enthaltenen Komponente, der Dimensionen, etc.

Als vorteilhaft erweist es sich wenn der thermische Sensor sehr sensitiv ist und eine geringe Ansprechzeit aufweist, beispielsweise bedingt durch die Ausgestaltung als MEMS-Sensor.

Die Erfindung wird anhand der nachfolgenden Figuren näher erläutert. Es zeigen

Fig. 1: eine schematische Darstellung einer beispielhaften Applikation eines thermischen Sensors im Zusammenhang mit dem erfindungsgemäßen Verfahren;

Fig. 2: ein Ablaufschema des erfindungsgemäßen Verfahrens;

Fig. 3: einen Graphen, welcher unkompensierte Messwerte für Strömungsgeschwindigkeiten unterschiedlicher Messmedien zeigt; und

Fig. 4: einen Graphen, welcher Messgrößen der 3-Omega-Methode unterschiedlicher Messmedien bei verschiedenen Strömungsgeschwindigkeiten zeigt.

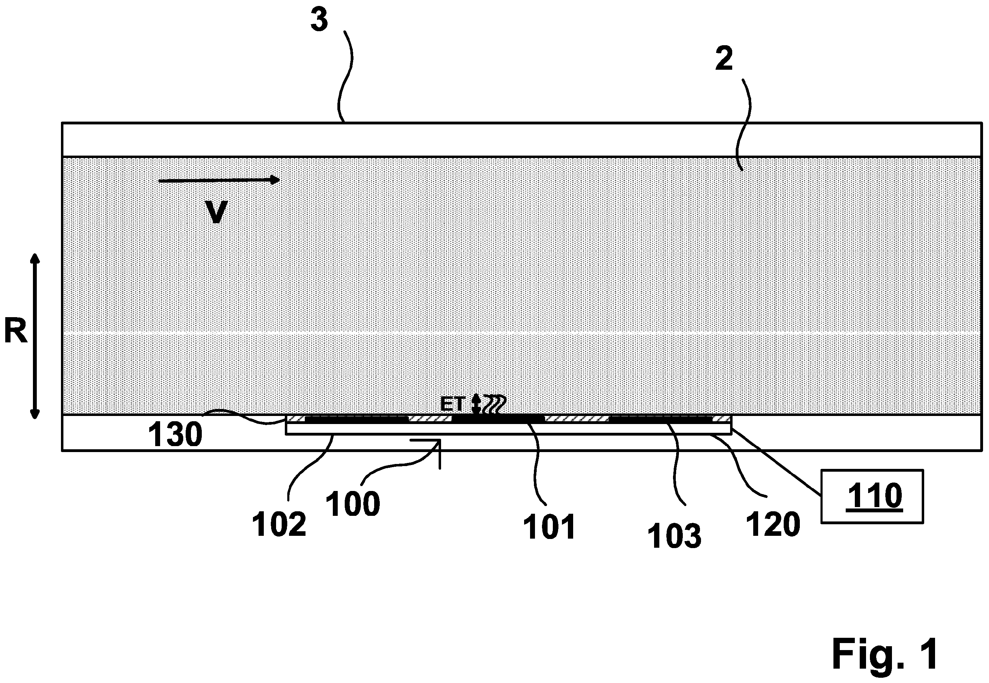

In Fig. 1 ist eine Beispielapplikation des erfindungsgemäßen Verfahrens gezeigt. Ein thermischer Sensor 100 in die Wandung eines Behältnisses 3 angebracht, bspw. mittels eines Löt- oder Klebeverfahrens. Bei dem Behältnis 3 handelt es sich um eine Rohrleitung, welche von einem fluiden (gasförmig oder flüssig) Messmedium 2 in Durchflussrichtung v durchflossen wird. Die Rohrleitung weist hierbei einen kreisförmigen Querschnitt aus.

Das erfindungsgemäße Verfahren ist auf viele Varianten einer solchen Applikation anwendbar. So kann es vorgesehen sein, den thermischen Sensor 100 auf der Innenwand des Behältnisses 3 anzubringen (beispielsweise eingebracht in einen Thermowell) oder an die Außenwand des Behältnisses 3 aufzubringen, beispielsweise mittels eines Lötverfahrens. Der Querschnitt des Behältnisses 3 kann alternativ eine beliebige Form aufweisen, bspw. quadratisch.

Der thermische Sensor 100 weist ein Substrat 120 auf. Auf das Substrat 120 sind per Dickschicht- oder Dünnschichttechnologie zumindest ein oder mehrere Sensorelemente 101 aufgebracht. Dieses besteht insbesondere aus Platin oder einem ähnlichen Material mit einem definierten temperaturabhängigen Widerstandswert (NTC oder PTC).

Im vorliegenden Fall ist der thermische Sensor 100 als thermischer Strömungssensor ausgestaltet. In einem solchen Fall dient das Sensorelement 101 dem abwechselnden zeitweisen Erhitzen des Messmediums 2 und dem Bestimmen der Temperatur des Messmediums 2.

Es kann vorgesehen sein, zwei oder mehrere, insbesondere in Flussrichtung v angeordnete, Sensorelemente 101, 102, 103 zu verwenden, wobei eines der Sensorelemente 101 als Heizelement ausgestaltet und mittig angeordnet ist und wobei jeweils eines der Sensorelemente 102, 103 als Temperatursensoren ausgestaltet sind und in Flussrichtung F aufwärts und in Flussrichtung F abwärts vom Heizelement angeordnet sind.

Ein solcher thermischer Strömungssensor 100 ist in den herkömmlichen bekannten Betriebsmodi "kalorimetrische Strömungsmessung", "anemometrische Strömungsmessung" und "Time-of-Flight-Strömungsmessung" betreibbar und weist neben den Sensorelementen 100 eine Elektronikeinheit 110, welche eine Steuereinheit, eine Auswerteeinheit und eine Spannungs-/Stromquelle umfasst, sowie Verdrahtungen zwischen den Sensroelementen und der Elektromikeinheit 110 auf.

Kalorimetrische thermische Strömungssensoren 100 bestimmen über eine Temperaturdifferenz zwischen zwei Sensorelementen 102, 103 in Gestalt von Temperatursensoren, welche flussabwärts (engl. "downstream") und flussaufwärts (engl. "upstream") von einem als Heizelement ausgestalteten Sensorelement 101 angeordnet sind, den Durchfluss bzw. die Flussrate des Messmediums 2 in einem Kanal. Hierzu wird ausgenutzt, dass die Temperaturdifferenz bis zu einem gewissen Punkt linear zu dem Durchfluss bzw. der Flussrate ist. Dieses Verfahren bzw. die Methode ist in der einschlägigen Literatur ausgiebig beschrieben.

Anemometrische thermische Strömungssensoren bestehen 100 aus zumindest einem Sensorelement 101 in Gestalt eines Heizelements, welches während der Messung des Durchflusses erhitzt wird. Durch die Umströmung des Heizelements mit dem Messmedium 2 findet ein Wärmetransport in das Messmedium statt, der sich mit der Strömungsgeschwindigkeit verändert. Durch Messung der elektrischen Größen des Heizelements kann auf die Strömungsgeschwindigkeit des Messmediums geschlossen werden.

Strömungssensoren nach dem sogenannten "Time-of-Flight"-Messprinzip weisen zumindest ein Sensorelement 101 in Gestalt eines Heizelements und ein Sensorelement 102, 103 in Gestalt eines Temperatursensors auf. Durch das Heizelement wird ein kurzzeitiger Wärmeimpuls in das Messmedium 2 abgegeben, welcher eine lokale Erwärmung des Messmediums 2 verursacht. Das fließende Messmedium 2 verursacht eine Bewegung der lokalen Erwärmung entsprechend des vorliegenden Flusses. Gelangt die lokale Erwärmung in die Nähe des Temperatursensors, wird diese von dem Temperatursensor erfasst. Eine Auswerteeinheit bestimmt die Zeitdifferenz zwischen dem Induzieren des Wärmeimpulses und der Detektion der lokalen Erwärmung durch den Temperatursensor. Die Zeitdifferenz stellt ein Maß für die Strömungsgeschwindigkeit des Messmediums dar. Je niedriger die Zeitdifferenz ist, desto höher ist die vorliegende Strömungsgeschwindigkeit des Messmediums 2, und vice versa.

Anstatt der Ausgestaltung eines Sensorelements 101, 102, 103 als Heizelement kann dieses auch als Kühlelement, beispielsweise ein Peltierelement, ausgestaltet. Die obig beschriebenen Betriebsmodi sind unter Benutzung eines Kühlelements ebenfalls ausführbar, es wird hierbei ein Kühlimpuls in das Messmedium induziert.

Auf dem Substrat und dem, bzw. den Sensorelementen 101, 102, 103 ist eine Passivierungsschicht 130, beispielsweise aus Glas, aufgebracht. Das Material und die Dicke des Substrats ist abhängig von der Art der Befestigung des thermischen Sensors 100 an dem Behältnis 3.

Im Falle, dass der thermische Sensor 100 an der Außenwand des Behältnisses angebracht werden soll, kann die Passivierungsschicht 130 ist hierfür lotfähig ausgestaltet sein. Der thermische Sensor 1 kann somit per Passivierungsschicht 130 mit den Sensorelementen 101, 102, 103 an die Außenwand des Behältnisses 3 gelötet werden, wodurch die thermische Leitfähigkeit in Richtung des Mediums erhöht wird. Das Substrat sollte hierbei einen hohen thermischen Widerstand, beispielsweise indem es aus einem keramischen Material besteht. Hierdurch wird die von den Sensorelementen 101, 102, 103 emittierte Wärme in Richtung des Messmediums 2 geleitet.

Im Falle, dass der thermische Sensor 100 umgekehrt, also per Substrat 120, mit der Außenwand des Behältnisses verbunden wird, ist das Substrat 120 derart ausgestaltet, dass es einen geringen Wärmewiderstand aufweist. Hierfür ist das Substrat 120 beispielsweise dünn ausgestaltet und besteht aus einem metallischen Material.

Die Aufgabe des thermischen Sensors 100 ist es, zum einen die Strömungsgeschwindigkeit des Messmediums 2, als auch die Zusammensetzung des Messmediums 2 zu ermitteln. Im vorliegenden Fall besteht das Messmedium aus zwei Inhaltsstoffen, Wasser und Harnstoff (Urea).

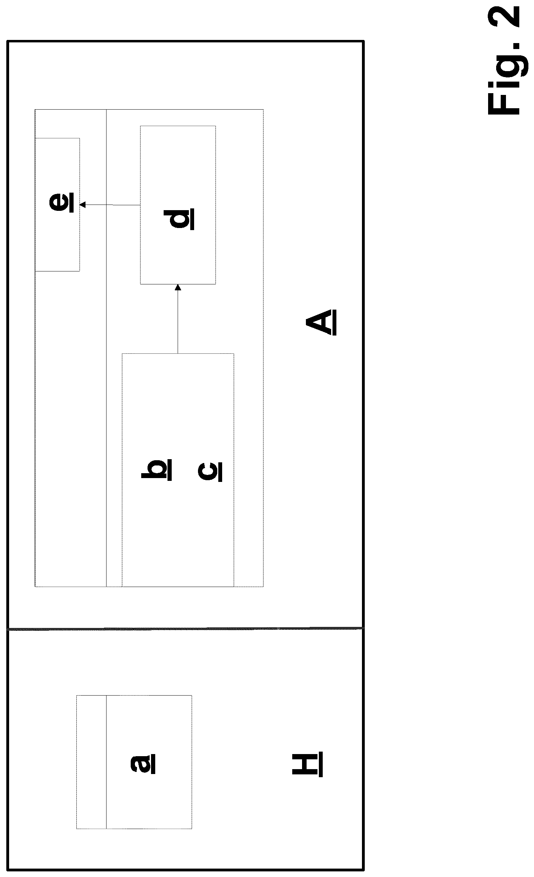

Fig. 2 zeigt ein Ablaufschema des erfindungsgemäßen Verfahrens. Herstellerseitig H erfolgt in einem Verfahrensschritt a eine Grundkalibrierung des thermischen Sensors 100. Hierfür wird der thermische Sensor 100 in eine Kalibriereinrichtung eingebaut, welche mit zwei Referenzfluiden durchströmt wird - bei dem ersten Referenzfluid handelt es sich um Wasser, bei dem zweiten Referenzfluid handelt es sich um Harnstoff oder um eine Harnstoff-Wasser-Mischung (bspw. AdBlue; 32 % Harnstoff, 68 % Wasser). Es kann hierbei vorgesehen sein, dass der thermische Sensor 100 fest mit dem Behältnis 3 verbunden ist, welches mit dem Sensor also mitgeliefert wird (bspw. als Teilrohr mit Anschlüssen) und entsprechend in die Kalibrationsanlage und in der späteren Applikation beim Kunden eingesetzt wird. In einem ersten Teilschritt wird die Kalibriereinrichtung mit Wasser durchströmt. Hierfür werden verschiedenen Werte der Strömungsgeschwindigkeit des Wassers eingestellt und ein Messwert des thermischen Sensors 100 für jede Strömungsgeschwindigkeit mittels einer Elektronikeinheit 110 des thermischen Sensors 100 erfasst. Hierdurch wird eine Grundkalibration des Strömungsmessung, also eine Abhängigkeit des Messwerts von der tatsächlich anliegenden Strömung, erstellt.

In einem zweiten Teilschritt wird zuerst Wasser in die Kalibrationseinrichtung eingeleitet, anschließend Wasser. Für beide Referenzmedien werden anschließend spezifische mediumsabhängige Messgrößen $V_{3\omega}$ mittels einer 3-Omega-Methode mittels der Elektronikeinheit erfasst. Hierfür wird das Sensorelement 101 von der Elektronikeinheit 100 mit einer Wechselspannung beaufschlagt. Die Frequenz der Wechselspannung soll hierbei so gewählt werden, dass die Eindringtiefe der von dem Sensorelement 101 emittierten Wärme in einem Bereich liegen, in welchem die Strömungsgeschwindigkeit des Messmediums 2 nahezu null beträgt. Dies ist insbesondere in der Nähe der Innenwand des Behältnisses 3 der Fall. In diesem Bereich ist die dominieren die Einflüsse der Eigenschaften des Messmediums die erfasste Messgröße gegenüber dem Einfluss der Strömungsgeschwindigkeit.

Die Messgröße $V_{3\omega}$ ist insbesondere eine Phasenverschiebung zwischen dem Verlauf der dritten harmonischen Oberschwingung der Wechselspannung und dem Verlauf der Amplitude der dritten harmonischen Oberschwingung der Temperatur und/oder Maximalamplitude des Verlaufs der dritten harmonischen Oberschwingung der Temperatur.

Der genaue Wert der Frequenz, bzw. des Frequenzbereichs, bei welchem obig beschriebenes Phänomen auftritt, lässt sich unabhängig vom genauen Aufbau des thermischen Sensors 101 mittels folgender Formel berechnen:

$$f = \frac{\alpha}{4\pi \left[ R \left( 1 - \sqrt{1 - \frac{\gamma}{2}} \right)^2 \right]}$$

Hierbei bezeichnet f die gesuchte Frequenz, wobei $\alpha$ ein Maß der thermischen Diffusivität des ersten Messmediums bezeichnet, wobei R einer halben Kanalbreite des Behältnisses an derjenigen Stelle entspricht, an welcher das erste Sensorelement mit dem Behältnis in thermischen Kontakt steht, wobei $\gamma$ eine dimensionslose Größe bzgl. der Strömungsgeschwindigkeit ist und ist in einem Bereich zwischen 0 und 0,2 liegt. Die halben Kanalbreite muss hierbei für das jeweilige Behältnis bekannt sein.

Im Falle, dass der thermische Sensor 100 an der Außenwand des Behältnisses angebracht wird, beeinflusst die Rohrwand gegebenenfalls die Diffusivität $\alpha$, was für das korrekte Anwenden der Formel beachtet werden muss. In einem solchen Falle wird von einer effektiven Diffusivität gesprochen, welche durch das erste Messmedium und dem thermischen Sensor 100, bzw. dessen Anbringung am Behältnis 3 abhängt.

Die Grundkalibrierung bezüglich der Strömungsgeschwindigkeit und die Messgrößen $V_{3\omega}$ der beiden Referenzmedien werden in der Elektronikeinheit 110 gespeichert.

Auf Anwendungsseite A wird der thermische Sensor entsprechend der Applikation eingebaut. Anschließend erfolgt in einem Verfahrensschritt b die Charakterisierung des Messmediums 2, welches aktuell das Behältnis 3 durchströmt. Bei dem Messmedium 2 handelt es sich um ein Wasser-Harnstoff-Gemisch. Simultan oder anschließend wird in einem Verfahrensschritt c ein Messwert der aktuellen Strömungsgeschwindigkeit des Messmediums 2 erfasst.

Für den Verfahrensschritt b wird wiederum eine 3-Omega-Messung entsprechend des oben beschriebenen Ablaufs durchgeführt und die Messgröße $V_{3\omega}$ des aktuellen Messmediums erfasst.

In einem Verfahrensschritt d erfolgt eine Berechnung der aktuellen Konzentration des Messmediums 2, also der Anteil der Komponenten Wasser und Harnstoff im Messmedium, sowie eine Kompensation der Strömungsgeschwindigkeit durch die Elektronikeinheit 110.

Für die Berechnung der Konzentrationen wird auf die beiden Messgrößen der Referenzmessmedien $V_{3\omega}$ zurückgegriffen. Die Messgröße $V_{3\omega}$ des aktuellen Messmediums 2 befindet zwischen den beiden Referenzmesswerten. Die Konzentrationen, bzw. der Anteil der Inhaltsstoffe in dem Messmedium 2 kann dann aus dem "Abstand" der aktuellen Messgröße $V_{3\omega}$ von den jeweiligen Grenzen, also den Referenzmessgrößen $V_{3\omega}$, berechnet werden.

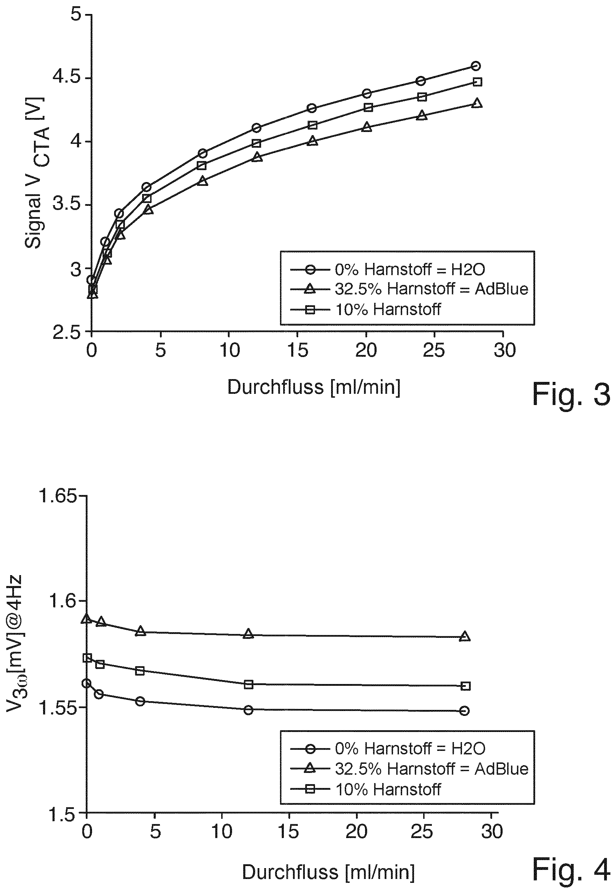

Die Kompensation des Messwerts der Strömungsgeschwindigkeit wird basierend auf der aktuellen Messgröße $V_{3\omega}$ und der Grundkalibration vorgenommen. Fig. 3 zeigt Messkurven unkompensierter Messwerte der Strömungsgeschwindigkeit für verschiedene Konzentrationen des Messmediums 2. Auf der x-Achse ist die Strömungsgeschwindigkeit des Messmediums 2 aufgetragen. Auf der y-Achse ist der Messwert des thermischen Sensors 100 für die jeweilige Strömungsgeschwindigkeit aufgetragen. Für die Messkurve mit den kreisförmigen Punkten wurde ein Messmedium mit den Anteilen 100 % Wasser und 0 % Harnstoff verwendet. Für die Messkurve mit den quadratischen Punkten wurde ein Messmedium mit den Anteilen 90 % Wasser und 10 % Harnstoff verwendet. Für die Messkurve mit den dreieckförmigen Punkten wurde ein Messmedium mit den Anteilen 67,5 % Wasser und 32,5 % Harnstoff verwendet. Es ist gut erkennbar, dass die Art des Messmediums 2, bzw. die im Messmedium vorhandenen Inhaltsstoffe und deren Anteile großen Einfluss auf die vom thermischen Sensor erfassten Messwerte haben. Aus diesem Grund müssen die Messwerte kompensiert werden. Hierfür wird eine Korrekturgröße berechnet, wobei die Korrekturgröße Abweichungen der Messgröße des Messmediums zu einer Referenzmessgröße eines Referenzmessmediums kompensiert. Hierfür wird ein mathematisches Modell des thermischen Sensors für das Berechnen der Korrekturgröße verwendet, wobei das mathematische Modell eine Abhängigkeit eines erstellten Messwerts einer erfassten Strömungsgeschwindigkeit von einer Messgröße $V_{3\omega}$ eines jeden beliebigen Messmediums 2 beschreibt. Die Messgröße $V_{3\omega}$ ist also ein direktes Maß für die Kompensation, bzw. für die zu erwartende Abweichung der gemessenen Strömungsgeschwindigkeit zu der tatsächlich vorliegenden Strömungsgeschwindigkeit.

Die Messgröße $V_{3\omega}$ des Messmediums 2 ist hierbei nur von dem Messmedium 2 abhängig, jedoch nicht, wie obig beschrieben, aufgrund der gewählten Frequenz der 3-Omega-Messung von der aktuellen Strömungsgeschwindigkeit des Messmediums 2. In Fig. 4 ist die Abhängigkeit der Messgrößen $V_{3\omega}$ (y-Achse) - in diesem Fall die Maximalamplitude - der jeweils in Fig. 3 gezeigten Messmedien von der Strömungsgeschwindigkeit (x-Achse) abgebildet. Es ist ersichtlich, dass die Messgrößen $V_{3\omega}$ durch obig beschriebene Wahl der Frequenz im Wesentlichen unabhängig von der Strömungsgeschwindigkeit sind und sich untereinander stark unterscheiden.

Im einem letzten Verfahrensschritt e werden die Konzentrationen und der aktuelle kompensierte Messwert der Strömungsgeschwindigkeit ausgegeben. Es kann vorgesehen sein, dass die Verfahrensschritte b bis e in regelmäßigen Zeitabständen erneut durchgeführt werden. Bei Verwendung eines einzelnen Sensorelements 101 können die Schritte des Bestimmens der Strömungsgeschwindigkeit und des Erfassens der Messgröße $V_{3\omega}$ alternierend ausgeführt werden. Bei Verwendung zumindest eines weiteren Sensorelements 102, 103 können diese Schritte simultan ausgeführt werden, wobei eines der Sensorelemente den Schritt des Bestimmens der Strömungsgeschwindigkeit und das andere Sensorelement den Schritt des Erfassens der Messgröße $V_{3\omega}$ durchführt.

Zusätzlich oder alternativ kann der thermische Sensor auch als Detektionssensor ausgestaltet sein. Dieser erfasst in regelmäßigen Zeitabständen die Messgröße $V_{3\omega}$ des Messmediums 2 und vergleicht diese mit einer Referenzmessgröße. Im Falle, dass die aktuelle Messgröße $V_{3\omega}$ um einen vorgegebenen Faktor von der Referenzmessgröße abweicht, gibt die Elektronikeinheit 110 einen Alarm aus.

**Bezugszeichenliste**

| | |
|---|---|
| 100 | thermischer Sensor |
| 101, 102, 103 | Sensorelemente |
| 110 | Elektronikeinheit |
| 120 | Substrat |
| 130 | Passivierungsschicht |
| 2 | Messmedium |
| 3 | Behältnis |
| ET | Eindringtiefe |
| R | halbe Kanalbreite |
| a, b, ..., e | Verfahrensschritte |
| v | Strömungsgeschwindigkeit |
| $V_{3\omega}$ | Messgröße des Messmediums |

**Patentansprüche**

1. Verfahren zum Betreiben eines thermischen Sensors (100), wobei der thermische Sensor (100) zumindest ein erstes Sensorelement (101) und eine Elektronikeinheit (110) aufweist,

> wobei das erste Sensorelement (101) mit einem Behältnis (3), insbesondere einer Rohrleitung, in thermischen Kontakt gebracht wird,
> wobei das Behältnis (3) von einem Messmedium (2) mit einer beliebigen Strömungsgeschwindigkeit durchströmt wird,
> wobei das erste Sensorelement (101) mittels einer in das Sensorelement (101) eingebrachten Wechselspannung periodisch erwärmt wird und simultan ein Verlauf der Temperatur des ersten Sensorelements (101) erfasst wird,
> wobei die Elektronikeinheit (110) eine Messgröße ($V_{3w}$) des Messmediums (2) anhand eines Vergleichs des Verlaufs der dritten harmonischen Oberschwingung der in das erste Sensorelement (101) eingebrachten Wechselspannung mit dem Verlauf der dritten harmonischen Oberschwingung der Temperatur des ersten Sensorelements (101), insbesondere durch Berechnung der Phasenverschiebung zwischen dem Verlauf der dritten harmonischen Oberschwingung der Wechselspannung und dem Verlauf der Amplitude der dritten harmonischen Oberschwingung der Temperatur, bestimmt, und
> wobei eine Frequenz der Wechselspannung derart ausgewählt wird, dass eine Eindringtiefe (ET) der emittierten Wärme des ersten Sensorelements (101) in das Strömungsprofil des Messmediums (2) vorliegt, in welcher die Strömungsgeschwindigkeit des Messmediums (2) nahezu null beträgt.

2. Verfahren nach Anspruch 1, wobei die Frequenz entsprechend der Formel $f = \dfrac{\alpha}{4\pi\left[R\left(1-\sqrt{1-\frac{\gamma}{2}}\right)^2\right]}$ berechnet und ausgewählt wird, wobei f die Frequenz bezeichnet, wobei $\alpha$ ein Maß der thermischen Diffusivität des ersten Messmediums (2) bezeichnet, wobei R einer halben Kanalbreite des Behältnisses (3) an derjenigen Stelle entspricht, an welcher das erste Sensorelement (101) mit dem Behältnis in thermischen Kontakt steht, wobei $\gamma$ eine dimensionslose Größe bzgl. der Strömungsgeschwindigkeit ist und ist in einem Bereich zwischen 0 und 0,2 liegt.

3. Verfahren nach Anspruch 1 oder 2, wobei der thermische Sensor (100) als thermischer Strömungssensor betrieben wird, weiter umfassend:

> - Berechnen einer Korrekturgröße, wobei die Korrekturgröße Abweichungen der Messgröße ($V_{3w}$) des Messmediums (2) zu einer Referenzmessgröße eines Referenzmessmediums kompensiert; und
> - Erfassen einer Strömungsgeschwindigkeit des Messmediums (2) und Erstellen von mittels der Korrekturgröße kompensierten Messwerten der Strömungsgeschwindigkeit.

4. Verfahren nach Anspruch 3, wobei ein mathematisches Modell des thermischen Sensors (100) für das Berechnen der Korrekturgröße verwendet wird, wobei das mathematische Modell eine Abhängigkeit eines erstellten Messwerts einer erfassten Strömungsgeschwindigkeit von einer Messgröße eines jeden beliebigen Messmediums beschreibt.

5. Verfahren nach Anspruch 4, wobei der thermische Sensor (100) ein zweites Sensorelement (102, 103) umfasst, wobei das zweite Sensorelement (102, 103) das Messmedium (2) mittels der Wechselspannung für den Schritt des Bestimmens der Messgröße ($V_{3w}$) periodisch erwärmt und wobei das erste Sensorelement (101) zum Erfassen der Strömungsgeschwindigkeit des Messmediums (2) verwendet wird.

6. Verfahren nach zumindest einem der vorherigen Ansprüche, wobei im Falle, dass das Messmedium (2) als binäres Gemisch zweier bekannten Inhaltsstoffe vorliegt, mittels der Messgröße ($V_{3w}$) die Konzentrationen der jeweiligen Inhaltsstoffe in dem Messmedium (2) berechnet wird.

7. Verfahren nach Anspruch 5 oder 6, wobei der Schritt des Bestimmens der Messgröße ($V_{3w}$) des Messmediums (2) mitsamt dem Berechnen der Korrekturgröße, sowie der Schritt des Erfassens der Strömungsgeschwindigkeit oder der Schritt des Berechnens der Konzentrationen simultan durchgeführt wird.

8. Verfahren nach zumindest einem der vorherigen Ansprüche, wobei der thermische Sensor (100) als Detektionssensor verwendet wird, wobei die Elektronikeinheit (110) die Messgröße ($V_{3w}$) in regelmäßigen Abständen neu bestimmt und mit einer Vergleichsmessgröße eines bekannten Messmedium vergleicht, und wobei die Elektronikeinheit (110) ein Signal erstellt und ausgibt, wenn sich die Messgröße ($V_{3w}$) um mehr als einen vorbestimmten Faktor von der Vergleichsmessgröße unterscheidet.

9. Verfahren nach zumindest einem der Ansprüche 3, 6 oder 8 wobei der Schritt des Bestimmens der Messgröße ($V_{3w}$) des Messmediums (2) mitsamt dem Berechnen der Korrekturgröße periodisch wiederholt wird und sich mit dem Schritt des Erfassens der Strömungsgeschwindigkeit oder dem Schritt des Berechnens der Konzentrationen abwechselt, wobei für Erstellen der kompensierten Messwerte die aktuell berechnete Korrekturgröße verwendet wird.

10. Thermischer Sensor (100), aufweisend zumindest ein erstes Sensorelement (101) und eine Elektronikeinheit (110), wobei das erste Sensorelement (101) mit einem Behältnis (3), insbesondere einer Rohrleitung, in thermischen Kontakt gebracht wird, wobei der thermische Sensor dazu ausgestaltet ist, mittels des Verfahrens nach zumindest einem der Ansprüche 1 bis 9 betrieben zu werden.

## Claims

1. Method for operating a thermal sensor (100), wherein the thermal sensor (100) has at least a first sensor element (101) and an electronic unit (110),

   wherein the first sensor element (101) is brought into thermal contact with a container (3), in particular a pipe,
   wherein the container (3) is flowed through by a measuring medium (2) at any flow velocity,
   wherein the first sensor element (101) is connected to a
   alternating voltage and simultaneously detecting a temperature curve of the first sensor element (101),
   wherein the electronic unit (110) determines a measured variable (V3) of the measuring medium (2) by comparing the curve of the third harmonic of the alternating voltage applied to the first sensor element (101) with the curve of the third
   harmonic of the temperature of the first sensor element (101), in particular by calculating the phase shift between the curve of the third harmonic of the alternating voltage and the curve of the amplitude of the third harmonic of the temperature, and
whereby a frequency of the alternating voltage is selected such that a penetration depth (ET) of the emitted heat of the first sensor element (101) into the flow profile of the measuring medium (2) is present, in which the flow velocity of the measuring medium (2) is almost zero.

2. Method according to claim 1, wherein the frequency is selected according to the formula

$$f = \frac{a}{4 \, R \left(1 - \sqrt{1 - \frac{\gamma}{2}}\right)}$$ where f denotes the frequency, where a is a

   Measure of the thermal diffusivity of the first measuring medium (2), where R corresponds to half the channel width of the container (3) at the point where the first sensor element (101) is in thermal contact with the container, where y is a dimensionless quantity relating to the flow velocity and is in a range between 0 and 0.2.

3. Method according to claim 1 or 2, wherein the thermal sensor (100) is operated as a thermal flow sensor, further comprising:

   - Calculating a correction value, wherein the correction value compensates for deviations in the

      measured variable (V3 ) of the measuring medium (2) to a reference
      measured variable of a reference measuring medium; and

   - Detecting a flow velocity of the measuring medium (2) and generating measured values of the flow velocity compensated by means of the correction quantity.

4. Method according to claim 3, wherein a mathematical model of the thermal sensor (100) is used to calculate the correction value, wherein the mathematical model describes a dependency of a generated measured value of a detected flow velocity on a measured variable of any measuring medium.

5. Method according to claim 4, wherein the thermal sensor (100) has a second sensor element (102, 103), wherein the second sensor element (102, 103) periodically heats the measuring medium (2) by means of the alternating voltage for the step of determining the measured variable (V3 ), and wherein the first sensor element (101) is used to detect the flow velocity of the measuring medium (2).

6. Method according to at least one of the preceding claims, wherein, in the event that the measuring medium (2) is present as a binary mixture of two known constituents, the concentrations of the respective constituents in the measuring medium (2) are calculated by means of the measured variable (V3).

7. Method according to claim 5 or 6, wherein the step of determining the measured variable (V3) of the measuring medium (2) together with calculating the correction variable, as well as the step of detecting the flow velocity or the step of calculating the concentrations, is performed simultaneously.

8. Method according to at least one of the preceding claims, wherein the thermal sensor (100) is used as a detection sensor, wherein the electronic unit (110) re-determines the measured variable (V3) at regular intervals and compares it with a reference measured variable of a known measuring medium, and wherein the electronic unit (110) generates and outputs a signal when the measured variable (V3) differs from the reference measured variable by more than a predetermined factor.

9. Method according to at least one of claims 3, 6, or 8, wherein the step of determining the measured variable (V3) of the measuring medium (2), including calculating the correction variable, is repeated periodically and is combined with the step of detecting the flow velocity or the step of calculating the concentrations, wherein the currently calculated correction value is used to generate the compensated measured values.

10. Thermal sensor (100), comprising at least a first sensor element (101) and an electronic unit (110), wherein the first sensor element (101) is brought into thermal contact with a container (3), in particular a pipe, wherein the thermal sensor is designed to Z designed to be operated by means of the method according to at least one of claims 1 to 9.

## Revendications

1. Procédé pour faire fonctionner un capteur thermique (100), le capteur thermique (100) comportant au moins un premier élément capteur (101) et une unité électronique (110),

le premier élément capteur (101) étant mis en contact thermique avec un récipient (3), en particulier une conduite,
le récipient (3) étant traversé par un fluide de mesure (2) à une vitesse d'écoulement quelconque, le premier élément capteur (101) étant alimenté en énergie au moyen d'un
tension alternative et enregistre simultanément une courbe de température du premier élément capteur (101),
l'unité électronique (110) déterminant une grandeur de mesure (V3) du milieu de mesure (2) à l'aide d'une comparaison de la courbe de la troisième harmonique de la tension alternative appliquée au premier élément capteur (101) avec la courbe de la troisième
harmonique de la température du premier élément capteur (101), en particulier en calculant le déphasage entre l'évolution de la troisième harmonique de la tension alternative et l'évolution de l'amplitude de la troisième harmonique de la température, et
une fréquence de la tension alternative étant choisie de telle sorte qu'une profondeur de pénétration (ET) de la chaleur émise par le premier élément capteur (101) dans le profil d'écoulement du milieu de mesure (2) est atteinte, dans lequel la vitesse d'écoulement du milieu de mesure (2) est pratiquement nulle.

2. Procédé selon la revendication 1, la fréquence étant calculée selon la formule $f = \dfrac{a}{4\pi R\left(1 - \sqrt{1 - \frac{\gamma}{2}}\right)}$ , où f désigne la fréquence, où a est un

Mesure de la diffusivité thermique du premier milieu de mesure (2), R correspondant à la moitié de la largeur du canal du récipient (3) à l'endroit où le premier élément capteur (101) est en contact thermique avec le récipient, y étant une grandeur sans dimension relative à la vitesse d'écoulement et se situant dans une plage comprise entre 0 et 0,2.

3. Procédé selon la revendication 1 ou 2, dans lequel le capteur thermique (100) fonctionne comme un capteur de débit thermique, comprenant en outre :

- Calcul d'une valeur de correction, la valeur de correction tenant compte des écarts de la valeur mesurée (V3) du milieu de mesure (2) par rapport à une valeur mesurée de référence d'un milieu de mesure de référence ; et
- Détection d'une vitesse d'écoulement du milieu de mesure (2) et création de valeurs de mesure de la vitesse d'écoulement compensées au moyen de la grandeur de correction.

4. Procédé selon la revendication 3, dans lequel un modèle mathématique du capteur thermique (100) est utilisé pour calculer la valeur de correction, le modèle mathématique décrivant une dépendance d'une valeur de mesure établie d'une vitesse d'écoulement enregistrée par rapport à une grandeur de mesure de n'importe quel milieu de mesure.

5. Procédé selon la revendication 4, dans lequel le capteur thermique (100) comprend un deuxième élément capteur
(102, 103), le deuxième élément capteur (102, 103) chauffant périodiquement le milieu de mesure (2) au moyen de la tension alternative pour l'étape de détermination de la grandeur mesurée ($V_3$), et le premier élément capteur (101) étant utilisé pour détecter la vitesse d'écoulement du milieu de mesure (2).

6. Procédé selon au moins l'une des revendications précédentes, dans lequel, dans le cas où le milieu de mesure (2) se présente sous la forme d'un mélange binaire de deux composants connus, les concentrations des composants respectifs dans le milieu de mesure (2) sont calculées à l'aide de la grandeur mesurée ($V_3$).

7. Procédé selon la revendication 5 ou 6, dans lequel l'étape de détermination de la grandeur mesurée ($V_3$) du milieu de mesure (2) avec le calcul de la grandeur de correction, ainsi que l'étape de détection de la vitesse d'écoulement ou l'étape de calcul des concentrations sont effectuées simultanément.

8. Procédé selon au moins l'une des revendications précédentes, dans lequel le capteur thermique (100) est utilisé comme capteur de détection, dans lequel l'unité électronique (110) redétermine la grandeur mesurée ($V_3$) à intervalles réguliers et la compare à une grandeur mesurée de référence d'un milieu de mesure connu, et dans lequel l'unité électronique (110) génère et émet un signal lorsque la grandeur mesurée ($V_3$) diffère de la grandeur mesurée de référence de plus d'un facteur prédéterminé.

9. Procédé selon au moins l'une des revendications 3, 6 ou 8, dans lequel l'étape consistant à déterminer la grandeur mesurée ($V_3$) du milieu de mesure (2) ainsi que le calcul de la grandeur de correction sont répétés périodiquement et se poursuivent avec l'étape consistant à enregistrer la
vitesse d'écoulement ou l'étape de calcul des concentrations, la grandeur de correction calculée actuellement étant utilisée pour établir les valeurs de mesure compensées.

10. Capteur thermique (100), comprenant au moins un premier élément capteur (101) et une unité électronique (110), le premier élément capteur (101) étant mis en contact thermique avec un récipient (3), en particulier une conduite, le capteur thermique étant Z

au moyen du procédé selon au moins l'une des revendications 1 à 9.

**Fig. 1**

EP 4 314 722 B1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018130548 A1
- DE 102020114487
- WO 2020009921 A1

**In der Beschreibung aufgeführte Nicht-Patentliteratur**

- **ROMAN BEIGELBECK et al.** A novel measurement method for the thermal properties of liquids by utilizing a bridge-based micromachined sensor. *Measurement Science and Technology*, 26 August 2011